# EUROPEAN PATENT SPECIFICATION

(11) **EP 0 913 065 B1**
(45) Date of publication and mention of the grant of the patent: **28.04.2004**
(21) Application number: 97940000.9
(22) Date of filing: 16.07.1997
(51) Int. Cl.: H04Q 3/00

(54) **METHOD FOR HANDLING TELEPHONE CALLS**
VERFAHREN ZUM ABWICKELN VON TELEFONGESPRÄCHEN
PROCEDE DE GESTION D'APPELS TELEPHONIQUES

(30) Priority: 19.07.1996 GB 9615154
(43) Date of publication of application: 06.05.1999
(73) Proprietor: TELEFONAKTIEBOLAGET LM ERICSSON, 126 25 Stockholm (SE)
(72) Inventor: JELLEMA, Bart, NL-5121 NJ Rijen (NL); PEEREN, Rene, NL-4901 HA Osterhart (NL); CROUGHAN, Louise, NL-4901 HA Osterhart (NL); ABEN, Freek, NL-5447 AG Rykevoort (NL)
(74) Representative: O'Connell, David Christopher
(86) International application number: PCT/EP1997/003790
(87) International publication number: WO 1998/004090

(56) References cited:
- EP-A- 0 717 570
- WO-A-95/35633
- GOLDBERG ET AL.: "Common channel signaling interface for Local Exchange carrier to Interexchange carrier interconnection" IEEE COMMUNICATIONS MAGAZINE, vol. 28, no. 7, July 1990, NEW YORK US, pages 64-71, XP000140259
- BROEK VAN DEN ET AL.: "DISTRIBUTED DATABASE FOR THIRD GENERATION MOBILE SYSTEMS" PROCEEDINGS OF THE INTERNATIONAL COUNCIL FOR COMPUTER COMMUNICATION: INTELLIGENT NETWORKS CONFERENCE, 4 May 1992, TAMPA US, pages 333-347, XP000684029

## Description

This invention relates to a method for handling telephone calls, and to a control point for use in such a method. In particular, the invention relates to a method for handling telephone calls, which allows service logic to be distributed over several control points in a network architecture.

An Intelligent Networks architecture typically includes a Service Control Point (SCP), which has a large number of Service Switching Points (SSP) connected to it. Each SSP is a switching system that can intercept telephone calls, and query the SCP. The SCP contains service specific logic and data, that allows it to return instructions to the SSP on how to deal with the intercepted call.

In some situations, however, it is advantageous to provide several SCPs in the network architecture. One such possibility arises when a SSP needs to be able to obtain data from two different databases, which are accessed through respective different SCPs.

US Patent No. 4,924,510 relates to such a situation, where a SSP needs to be able to access information stored in one of two databases at two different SCPs. In response to a dialled number, the SSP queries a first SCP. If the relevant information is not stored in the database associated with the first SCP, the first SCP returns a message to the SSP, containing a special number, which is in effect a modified version of the called party number which initiated the initial query. In response to this modified number, the SSP then sends a query to the second control point, with which the second database is associated, in order to obtain the required data from the second database. However, this method has the disadvantage that the special number returned from the first control point to the switching point needs to be analysed in exactly the same way as the originally dialled called party number. This puts an extra processing load on the SSP. A similar system is described in W095/35633 (Bellsouth Corporation).

US Patent No. 5,386,467 seeks to avoid perceived disadvantages in the method disclosed in US-4,924,510, by defining a new SCP-SCP protocol. Then, when a first SCP determines that it is unable to provide enough information to establish the required connection, it directly requests that information from the second SCP by sending an information request message. The second SCP then transmits the requested information directly to the SSP. An advantage of such a method is that it requires only three message transmissions to provide the requested information. However, this proposed solution has the disadvantage that it requires a degree of compatibility between the first and second SCPs, in that they need to share an appropriate protocol.

Thus, in the prior art, there is no way of obtaining information from two different SCPs, to deal with a single call request. As a result, all of the information required by a switching point to deal with a call request must be stored at a single SCP, and there is no possibility of a distributed arrangement of service logic.

In accordance with the present invention, the first SCP is able to return a message to the SSP, containing an explicit instruction to direct a query to a specified second SCP. This has the advantage that the message which is returned requires less processing in the SSP. Moreover, the query which is sent to the second SCP can contain information which allows the second SCP, in its turn, to return control back to the first SCP. This allows a distributed arrangement of service logic.

For a better understanding of the present invention, reference will now be made, by way of examples, to the accompanying drawings, in which:
Figure 1 is a block schematic diagram of a network architecture in accordance with the present invention; and
Figure 2 is a flow diagram illustrating a part of the operation of the network architecture in accordance with the present invention.

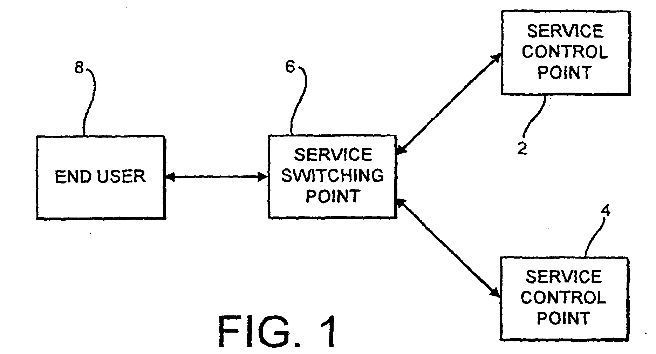

As shown in Figure 1, the network includes two service control points 2, 4, and a service switching point 6. Of course, it will be appreciated that, in practice, the network will include a large number of service switching points, and may well include more than two service control points, but the illustrated part of the network is sufficient for explanation of the present invention. The service switching point (SSP) 6 intercepts calls sent from an end user 8, which are intended for transfer to other users, perhaps via other switching points. In order to connect the call correctly, the SSP 6 must obtain information from a service control point (SCP). Thus, the SCP stores service specific logic and data, that allows it to return instructions to the SSP, on how to deal with an intercepted call. In prior art networks having this basic structure, there is no way of obtaining information from two different SCPs, to deal with a single call request. As a result, each SCP must store all of the necessary information, and there is no possibility of a distributed arrangement of service logic. Although the prior art discloses network architectures, in which a switching point is able to access two different databases, there are problems associated with those proposed solutions, as discussed above, and they do not enable fully distributed service logic.

In some situations, however, it can be advantageous to execute service logic in a distributed manner. For example, it can be advantageous to provide a large number of control points, located close to their respective users, containing the service logic relating to the more common parts of a service, for example interrogating the user with respect to the requested feature, assessing the user's rights of access to the service, or gathering statistics on the outcome of the call. The more service specific part of the logic may advantageously be executed in a centralised SCP, which is queried by a large number of SSPs. This avoids the need to install and maintain the complete SCP software and data at each location, and also avoids the disadvantage that a single centralised SCP, containing all of the service logic and data, would necessarily imply large amounts of long distance signalling traffic.

Similarly, an advantage of a distributed logic architecture would be that, even if a user were temporarily located in another operator's network, he would be able to make use of the same services as if he were calling from his home.

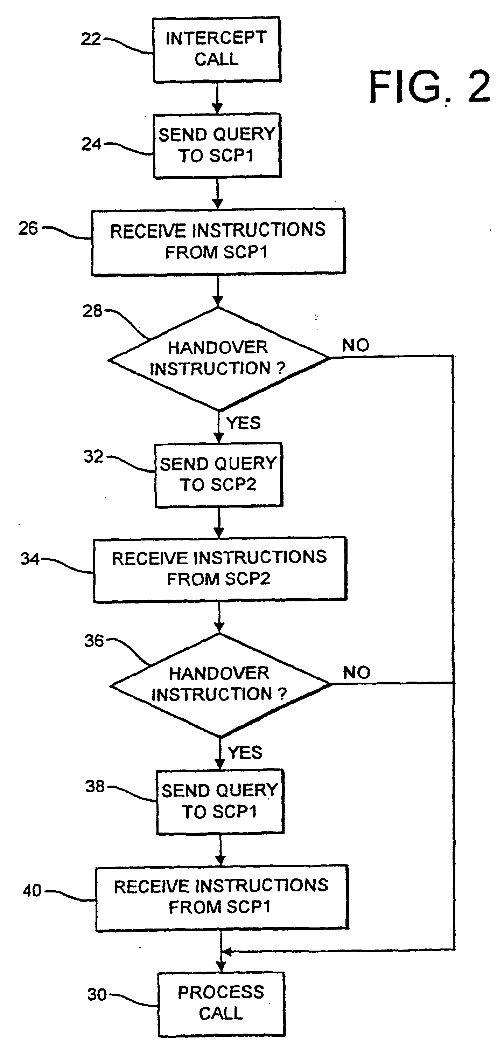

Figure 2 is a flow diagram, illustrating the use of the present invention, and its effect on the operation of a SSP.

In step 22, the SSP intercepts a call from an end user. In response thereto, in step 24, the SSP sends a query to a first SCP, for example SCP 2 in Figure 1. In response to the query, the SSP receives instructions in step 26 from the first SCP.

In step 28, these instructions are analysed, to determine whether they include a handover instruction.

A handover instruction is sent from the SCP, if it determines, during the execution of a service, that another SCP should take over control of the call attempt. The handover instruction includes: a parameter indicating the network address of the SCP sending the instruction; a parameter indicating the network address of the other SCP, to which control is to be transferred; and a counter, which is incremented on handover, in order to ensure that two SCPs do not hand over to each other in an infinite loop. Advantageously, the handover instruction may also include the following additional information: a parameter containing correlation information for the SCP sending the instruction; a parameter containing correlation information for the SCP to which control is to be transferred; a parameter containing information that can be used in the set up of a TCAP dialogue towards the second SCP, such as identification of the used protocol, TCAP Dialogue Portion data etc; and a parameter containing information that was used in the set up of the TCAP dialogue towards the first SCP, in order to allow control to be handed back to that SCP.

If, in step 28, it is determined that no handover instruction has been received, the call is processed in step 30 in the conventional way. If, however, it is determined in step 28 that a handover instruction has been received, the dialogue between the SSP and the first SCP is closed, and a new dialogue with a second SCP, for example the SCP 4 in Figure 1, is opened, as a query is sent to the second SCP in step 32. This new dialogue is able to use the address and other information indicated by the first SCP. In response to the query sent to the second SCP, instructions are received in step 34. As in step 28, these instructions are analysed in step 36, to determine whether they include a handover instruction. If not, the call is processed in step 30. If a handover instruction is received, indicating that control of the call should be handed back to the first SCP, an appropriate query is sent in step 38. Then, in step 40, appropriate instructions are received from the first SCP and the procedure passes to step 30, where the call is processed.

It will be appreciated that the second SCP may determine that a third SCP should take over control of the call attempt. If so, appropriate handover instructions may be returned to the SSP, including for example the network address of the third SCP. In such a case, the SSP then directs a query to the third SCP and receives instructions therefrom. Such instructions may allow the call to be processed or may include an instruction to handover to a further SCP.

There is thus disclosed a method of call handling which allows an efficient distribution of service logic, without requiring a new SCP to SCP interface.

In particular, it should be noted that the SSP may communicate with the two SCPs using different protocols.

## Claims

1. A method of handling telephone calls in a network comprising at least one switching point (6), to which calls are directed, and a plurality of control points (2, 4), to which queries are directed from the switching points (6),
wherein, when a first control point (2) receives a query from a switching point (6), and determines that a second control point (4) should deal with at least a part of the query, the first control point (2) returns a message to the switching point (6), **characterized in that** the message contains an explicit instruction, instructing the switching point (6) to direct a query to the second control point (4).

2. A method as claimed in claim 1, wherein the message returned from the first control point (2) to the switching point (6) contains information for transmission to the second control point (4), allowing the second control point (4) to return a second message to the switching point (6), instructing it to direct a further query to the first control point (2).

3. A method as claimed in claim 2, wherein the information for transmission to the second control point (4), contained in the message returned from the first control point (2) to the switching point (6), includes the network address of the first control point (2).

4. A method as claimed in claim 1, wherein, when the first-control point (2) determines that it should itself deal with a first part of the query, and determines that a second control point (4) should deal with a second part of the query, the first control point (2) returns a message to the switching point (6), containing instructions relating to the first part of the query, and instructing it to direct a query to the second control point (4).

5. A control point (2), for use in a network comprising at least one switching point (6), to which calls are directed, and a plurality of control points (4), to which queries are directed from the switching points (6),
the control point (2) comprising means for determining whether a second control point (4) should deal with at least a part of a query from a switching point (6), and, in response to such a determination, for returning a message to the switching point (6), **characterized in that** the message contains an explicit instruction, instructing the switching point (6) to direct a query to a second control point (4).

6. A control point (2) as claimed in claim 5, wherein the message returned from the control point (2) to the switching point (6) contains information for transmission to the second control point (4), allowing the second control point (4) to return a second message to the switching point (6), instructing it to direct a further query to the control point (2).

7. A control point (2) as claimed in claim 6, wherein the information for transmission to the second control point (4), contained in the message returned from the control point (2) to the switching point (6), includes the network address of the control point (2).

8. A control point (2) as claimed in claim 5, wherein in response to a determination that it should itself deal with a first part of the query, and that a second control point (4) should deal with a second part of the query, the first control point (2) returns a message to the switching point (6), containing instructions relating to the first part of the query, and instructing the switching point (6) to direct a query to the second control point (4).

9. A switching point (6), for use in a network comprising at least one switching point (6), to which calls are directed, and a plurality of control points (2, 4), to which queries are directed from the switching point (6), **characterized in that**
the switching point (6) comprising means for analyzing instructions returned from a first control point (2), and recognizing an explicit instruction to direct a query to a specific second control point (4) identified in the instruction.

10. A network architecture, comprising at least one switching point (6), and a plurality of control points (2, 4), wherein:
a first control point (2) includes logic relating to common service functions, and
a second control point (4) includes logic relating to service specific functions, and wherein
the first control point (2) comprises means for determining whether the second control point (4) should deal with at least a part of a query from a switching point (6), and, in response to such a determination, for returning a message to the switching point (6), **characterized in that** the message contains an explicit instruction, instructing the switching point (6) to direct a query to the second control point (4).

## Patentansprüche

1. Verfahren zum Behandeln von Telefonrufen in einem Netz, das mindestens eine Dienste-Vermittlungsstelle (6) umfasst, zu welcher Rufe gerichtet sind und eine Vielzahl von Dienste-Steuerungsstellen (2, 4), zu welchen Abfragen von den Vermittlungsstellen (6) gerichtet werden,
wobei wenn eine erste Steuerungsstelle (2) eine Abfrage von einer Vermittlungsstelle (6) empfängt und bestimmt, dass eine zweite Steuerungsstelle (4) mindestens einen Teil der Abfrage behandeln sollte, die erste Steuerungsstelle (2) eine Meldung zu der Vermittlungsstelle (6) zurücksendet,
**dadurch gekennzeichnet,**
**dass** die Meldung eine explizite Anweisung enthält, die die Vermittlungsstelle (6) anweist, eine Abfrage zu der zweiten Steuerungsstelle (4) zu richten.

2. Verfahren nach Anspruch 1, wobei die von der ersten Steuerungsstelle (2) zu der Vermittlungsstelle (6) zurückgesendete Meldung Information zur Übertragung zu der zweiten Steuerungsstelle (4) enthält, die es der zweiten Steuerungsstelle (4) ermöglicht, eine zweite Meldung zu der Vermittlungsstelle (6) zurückzusenden, diese anweisend, eine fernere Abfrage zu der ersten Steuerungsstelle (2) zu richten.

3. Verfahren nach Anspruch 2, wobei die Information zur Übertragung zu der zweiten Steuerungsstelle (4), die in der von der ersten Steuerungsstelle (2) zu der Vermittlungsstelle (6) zurückgesende ten Meldung enthalten ist, die Netzadresse der ersten Steuerungsstelle (2) einschließt.

4. Verfahren nach Anspruch 1, wobei wenn die erste Steuerungsstelle (2) bestimmt, dass sie selbst einen ersten Teil der Abfrage behandeln sollte und bestimmt, dass eine zweite Steuerungsstelle (4) einen zweiten Teil der Abfrage behandeln sollte, die erste Steuerungsstelle (2) eine Meldung zu der Vermittlungsstelle (6) zurücksendet, welche Anweisungen bezüglich dem ersten Teil der Abfrage enthält und sie anweist, eine Abfrage zu der zweiten Steuerungsstelle (4) zu richten.

5. Steuerungsstelle (2) zur Verwendung in einem Netz, das mindestens eine Vermittlungsstelle (6) umfasst, zu welcher Rufe gerichtet werden und eine Vielzahl von Steuerungsstellen (4), zu welchen Abfragen von den Vermittlungsstellen (6) gerichtet werden,
wobei die Steuerungsstelle (2) eine Vorrichtung umfasst, zum bestimmen, ob eine zweite Steuerungsstelle (4) mindestens einen Teil einer Abfrage von einer Vermittlungsstelle (6) behandeln sollte, und ansprechend auf ein solches Bestimmen, zum Zurücksenden einer Meldung zu der Vermittlungsstelle (6),
**dadurch gekennzeichnet,**
**dass** die Meldung eine explizite Anweisung einschließt, die die Vermittlungsstelle (6) anweist, eine Abfrage zu einer zweiten Steuerungsstelle (4) zu richten.

6. Steuerungsstelle (2) nach Anspruch 5, wobei die von der Steuerungsstelle (2) zu der Vermittlungsstelle (6) zurückgesendete Meldung Information enthält zur Übertragung zu der zweiten Steuerungsstelle (4), die es der zweiten Steuerungsstelle (4) ermöglicht, eine zweite Meldung zu der Vermittlungsstelle (6) zurückzusenden, welche diese anweist, eine fernere Anfrage zu der Steuerungsstelle (2) zu richten.

7. Steuerungsstelle (2) nach Anspruch 6, wobei die Information zur Übertragung zu der zweiten Steuerungsstelle (4), die in der von der Steuerungsstelle (2) zu der Vermittlungsstelle (6) zurückgesendeten Meldung enthalten ist, die Netzadresse der Steuerungsstelle (2) einschließt.

8. Steuerungsstelle (2) nach Anspruch 5, wobei die erste Steuerungsstelle (2) ansprechend auf ein Bestimmen, dass sie selbst einen ersten Teil der Absprache behandeln sollte, und dass eine zweite Steuerungsstelle (4) einen zweiten Teil der Abfrage behandeln sollte, eine Meldung zu der Vermittlungsstelle (6) zurücksendet, welche Anweisungen in Bezug auf den ersten Teil der Abfrage enthält und die Vermittlungsstelle (6) anweist, eine Abfrage zu der zweiten Steuerungsstelle (4) zu richten.

9. Vermittlungsstelle (6) zur Verwendung in einem Netz, das mindestens eine Vermittlungsstelle (6) umfasst, zu welcher Rufe gerichtet werden und eine Vielzahl von Steuerungsstellen (2, 4), zu welchen Abfragen von Vermittlungsstellen (6) gerichtet werden, **dadurch gekennzeichnet, dass**
die Vermittlungsstelle (6) eine Vorrichtung zum Analysieren von Anweisungen umfasst, die von einer ersten Steuerungsstelle (2) zurückgesendet worden sind und eine explizite Anweisung erkennt zum richten einer Abfrage zu einer spezifischen zweiten Steuerungsstelle (4), die in der Anweisung identifiziert ist.

10. Netzarchitektur, mindestens eine Vermittlungsstelle (6) umfassend und eine Vielzahl von Steuerungsstellen (2, 4) wobei:
eine erste Steuerungsstelle (2) eine Logik einschließt in Bezug auf gemeinsame Dienstefunktionen und
eine zweiten Steuerungsstelle (4) eine Logik einschließt in Bezug auf diestespezifische Funktionen, und wobei
die erste Steuerungsstelle (2) eine Vorrichtung umfasst, zum Bestimmen, ob die zweite Steuerungsstelle (2) mindestens einen Teil einer Abfrage von einer Vermittlungsstelle (6) behandeln sollte, und ansprechend auf ein solches Bestimmen, zum Zurücksenden einer Meldung zu der Vermittlungsstelle (6),
**dadurch gekennzeichnet,**
**dass** die Meldung eine explizite Anweisung enthält, die die Vermittlungsstelle (6) anweist, eine Abfrage zu der zweiten Steuerungsstelle (4) zu richten.

## Revendications

1. Procédé de gestion d'appels téléphoniques dans un réseau comprenant au moins un point de commutation (6), vers lequel sont dirigés des appels, et une pluralité de points de commande (2, 4), vers lesquels sont dirigées des requêtes en provenance des points de commutation (6),
dans lequel, lorsqu'un premier point de commande (2) reçoit une requête d'un point de commutation (6) et détermine qu'un second point de commande (4) doit traiter au moins une partie de la requête, le premier point de commande (2) renvoie un message au point de commutation (6), **caractérisé en ce que** le message contient une instruction explicite, ordonnant au point de commutation (6) de diriger une requête vers le second point de commande (4).

2. Procédé selon la revendication 1, dans lequel le message renvoyé par le premier point de commande (2) au point de commutation (6) contient des informations destinées à être transmises au second point de commande (4), permettant au second point de commande (4) de renvoyer un second message au point de commutation (6), lui ordonnant de diriger une requête supplémentaire vers le premier point de commande (2).

3. Procédé selon la revendication 2, dans lequel les informations destinées à être transmises au second point de commande (4), contenues dans le message renvoyé par le premier point de commande (2) au point de commutation (6), contiennent l'adresse réseau du premier point de commande (2).

4. Procédé selon la revendication 1, dans lequel, lorsque le premier point de commande (2) détermine qu'il doit lui-même traiter une première partie de la requête, et détermine qu'un second point de commande (4) doit traiter une seconde partie de la requête, le premier point de commande (2) renvoie au point de commutation (6) un message contenant des instructions concernant la première partie de la requête, et lui ordonnant de diriger une requête vers le second point de commande (4).

5. Point de commande (2), destiné à être utilisé dans un réseau comprenant au moins un point de commutation (6) vers lequel sont dirigés des appels, et une pluralité de points de commande (4), vers lesquels sont dirigées des requêtes en provenance des points de commutation (6),
le point de commande (2) comprenant un moyen pour déterminer si un second point de commande (4) doit traiter au moins une partie d'une requête provenant d'un point de commutation (6) et, en réponse à cette détermination, pour renvoyer un message au point de commutation (6), **caractérisé en ce que** le message contient une instruction explicite, ordonnant au point de commutation (6) de diriger une requête vers un second point de commande (4).

6. Point de commande (2) selon la revendication 5, dans lequel le message renvoyé par le premier point de commande (2) au point de commutation (6) contient des informations destinées à être transmises vers le second point de commande (4), permettant au second point de commande (4) de renvoyer au point de commutation (6) un second message lui ordonnant de diriger une requête supplémentaire vers le point de commande (2).

7. Point de commande (2) selon la revendication 6, dans lequel les informations destinées à être transmises vers le second point de commande (4), contenues dans le message renvoyé du point de commande (2) au point de commutation (6), contiennent l'adresse réseau du point de commande (2).

8. Point de commande (2) selon la revendication 5, dans lequel, en réponse à une détermination selon laquelle il doit lui-même traiter une première partie de la requête, et selon laquelle un second point de commande (4) doit traiter une seconde partie de la requête, le premier point de commande (2) renvoie au point de commutation (6) un message contenant des instructions concernant la première partie de la requête, et ordonnant au point de commutation (6) de diriger une requête vers le second point de commande (4).

9. Point de commutation (6), destiné à être utilisé dans un réseau comprenant au moins un point de commutation (6) vers lequel sont dirigés des appels, et une pluralité de points de commande (2, 4) vers lesquels sont dirigées des requêtes en provenance du point de commutation (6), **caractérisé en ce que** :
le point de commutation (6) comprend un moyen pour analyser des instructions renvoyées par un premier point de commande (2), et pour reconnaître une instruction explicite pour diriger une requête vers un second point de commande (4) spécifique identifié dans l'instruction.

10. Architecture de réseau, comprenant au moins un point de commutation (6), et une pluralité de points de commande (2, 4), dans laquelle :
un premier point de commande (2) comporte un système logique concernant des fonctions de services communs, et
un second point de commande (4) comporte un système logique concernant des fonctions spécifiques de services, et dans laquelle :
le premier point de commande (2) comprend un moyen pour déterminer si le second point de commande (4) doit traiter au moins une partie d'une requête provenant d'un point de commutation (6), et, en réponse à cette détermination, pour renvoyer un message au point de commutation (6), **caractérisée en ce que** le message contient une instruction explicite ordonnant au point de commutation (6) de diriger une requête vers le second point de commande (4).
